# EUROPÄISCHE PATENTANMELDUNG

(11) **EP 2 927 158 A1**
(43) Veröffentlichungstag der Anmeldung: **07.10.2015**
(21) Anmeldenummer: 14162583.0
(22) Anmeldetag: 31.03.2014
(51) Int. Cl.: B65D 85/804, A47J 31/06

(54) **Filter Kapsel**

(71) Anmelder: Brücker, Gerhard, 6414 Oberarth (CH)
(72) Erfinder: Brücker, Gerhard, 6414 Oberarth (CH)
(74) Vertreter: Koelliker, Robert

(57) **Zusammenfassung**

Die vorliegende Erfindung betrifft eine Kapsel (1) geeignet für Kapselmaschinen umfassend Kapselwand (2), Filter (3) und gegebenenfalls Abdeckung (4), wobei die Kapsel (1) im Wesentlichen keinen Geschmackstoff (5) enthält.

Beansprucht wird auch ein Verfahren zum Herstellen von Getränken umfassend das Einlegen der Kapsel (1) in eine Kapselmaschine, das Hindurchleiten von Wasser durch die Kapsel (1) und Sammeln des Wassers in einem Gefäss (7), wobei dem Gefäss (7) mindestens ein Geschmackstoff (5) zugegeben wird bevor, während und/oder nachdem das Wasser im Gefäss (7) gesammelt wird.

Zudem betrifft die Erfindung die Verwendung der Kapsel (1) zum Filtern von Wasser in einer Kapselmaschine, wobei das Wasser anschliessend in einem Gefäss (7) gesammelt wird.

## Beschreibung

Die Erfindung betrifft eine Filter Kapsel für Kapselmaschinen, die im Wesentlichen keinen Geschmackstoff enthält, ein Verfahren zum Herstellen von Getränken mit dieser Kapsel, sowie die Verwendung der Kapsel zum Filtern von Wasser in einer Kapselmaschine.

In den letzten Jahren hat die Herstellung von Kaffee in Kapselmaschinen stark zugenommen. Vorteilhaft bei dieser Herstellungsart ist die grosse Auswahl von verschiedenen Kaffee Aromen, die saubere Handhabung von Kaffee Pulver auch nach der Herstellung des Kaffees sowie die schnelle Zubereitung des Kaffees.

So erstaunt es wenig, dass in neuerer Zeit auch Kapselmaschinen und entsprechende Tee Kapseln angeboten werden.

Wird nur Kaffee oder nur Tee konsumiert, mag diese Lösung befriedigen. Werden jedoch sowohl Kaffee wie auch Tee getrunken, braucht es zwei verschiedene Maschinen. Da beispielsweise in Haushalten zudem oft auch andere heisse Getränke konsumiert werden, ist zusätzlich mindestens ein weiteres Gerät, wie beispielsweise ein Wasser Kocher, notwendig. Mehrere Geräte versperren jedoch viel Platz und müssen alle gewartet werden, was nachteilig ist. Zudem verbraucht ein Wasserkocher beim Erhitzen von Wasser relativ viel Energie, da in der Regel wesentlich mehr Wasser erhitzt wird als für ein Getränk effektiv benötigt wird.

Daher stellt sich die Aufgabe, ein System zu entwickeln, mit welchem auf einfache Art und Weise mit einer bestehenden Kapselmaschine neben Kaffee und Tee auch beliebig andere, bevorzugt heisse, Getränke zubereitet werden können.

Diese Aufgabe konnte überraschenderweise gelöst werden mit einer Kapsel (1) geeignet für Kapselmaschinen umfassend Kapselwand (2), Filter (3) und gegebenenfalls Abdeckung (4), dadurch gekennzeichnet, dass die Kapsel (1) im Wesentlichen keinen Geschmackstoff (5) enthält.

Beansprucht wird auch ein Verfahren zum Herstellen von Getränken umfassend
- das Einlegen der erfindungsgemässen Kapsel (1) in Kapselmaschine,
- das Hindurchleiten von Wassers durch die Kapsel (1) und Sammeln des Wassers in einem Gefäss (7),
dadurch gekennzeichnet, dass dem Gefäss (7) mindestens ein Geschmackstoff (5) zugegeben wird bevor, während und/oder nachdem das Wasser im Gefäss (7) gesammelt wird.

Gegenstand der Erfindung ist zudem auch die Verwendung der erfindungsgemässen Kapsel (1) zum Filtern von Wasser in einer Kapselmaschine, wobei das Wasser anschliessend in einem Gefäss (7) gesammelt wird.

Die vorliegende erfindungsgemässe Kapsel (1), das erfindungsgemässe Verfahren zur Herstellung von Getränken unter Einbezug der erfindungsgemässen Kapsel (1) und die erfindungsgemässe Verwendung der Kapsel (1) besitzen viele Vorteile. So wurde überraschend gefunden, dass der Filter (3) in der Kapsel (1) allfällige unerwünschte Partikel vom Wasser und/oder der Kapselmaschine, wie beispielsweise Rückstände oder Ablagerungen, vom Wasser abtrennt. Zudem kann eine Vielzahl von unterschiedlichsten Getränken mit verschiedensten Aromen mit einer einzigen Kapselmaschine auf einfache Art und Weise hergestellt werden. Dadurch werden weitere Kapselmaschinen und/oder Geräte, wie beispielsweise zum Erhitzen von Wasser, überflüssig. Dies wirkt sich energetisch positiv aus, insbesondere bei der grauen Energie, d.h. bei der Energie, die zur Herstellung von Maschinen wie Kapselmaschinen oder Wasserkocher benötigt wird. Denn mit der erfindungsgemässe Kapsel (1), das erfindungsgemässe Verfahren zur Herstellung von Getränken unter Einbezug der erfindungsgemässen Kapsel (1) und die erfindungsgemässe Verwendung der Kapsel (1) können überraschenderweise mit einem Gerät verschiedenste, auch heisse, Getränke hergestellt werden. Auch kann auf einfache Art und Weise die Intensität des Geschmacks im Getränk eingestellt werden, indem mehr oder weniger Geschmackstoff (5) zu dosiert und/oder beispielsweise ein Teebeutel länger oder weniger lang im heissen Wasser gelassen wird. Es ist auch möglich, auf diese Art und Weise solche Getränke herzustellen, deren Menge an Geschmackstoff (5) das Volumen von Kapseln übersteigt, wie beispielsweise Suppen.

Die erfindungsgemässe Kapsel (1) besitzt im Wesentlichen die gleiche Form wie bestehende Kapseln mit Geschmackstoff, insbesondere wie bestehende Kaffeekapseln und/oder Teekapseln. Unter dem Begriff "im Wesentlichen" wird verstanden, dass die Kapsel (1) problemlos in Kapselmaschinen eingeführt werden kann, beim Bedienen der Kapselmaschinen Wasser durch die Kapsel durchgeleitet wird und das Wasser durch den vorgesehenen Auslass aus der Kapselmaschine austritt. Dadurch sind sie auch mit bestehenden, kommerziell erhältlichen Kapselmaschinen kompatibel, mit denen beispielsweise Kaffee und/oder Tee zubereitet werden können. Solche Kapselmaschinen werden beispielsweise unter den Marken DeLonghi Nespresso, Krups Dolce Gusto, Krups Nespresso, Aldi Expressi, Bosch Tassimo, Tchibo Cafissimo, Special.T, Zenius und/oder Gemini CS im Handel angeboten.

Die erfindungsgemässe Kapsel (1) enthält im Wesentlichen keinen Geschmackstoff (5), d.h. der Anteil an Geschmackstoff (5) beträgt weniger als 10 Gew.-%, bevorzugt weniger als 5 Gew.-% und insbesondere weniger als 2.5 Gew.-%, bezogen auf das Gesamtgewicht der Kapsel (1). Ganz besonders bevorzugt enthält die Kapsel (1) keinen, d.h. 0 Gew.-%, Geschmackstoff (5), bezogen auf das Gesamtgewicht der Kapsel (1). Dadurch ist das durch die Kapsel (1) durchgeleitete Wasser geschmacksneutral, d.h. der Geschmack des durchgeleiteten Wassers ist im Wesentlichen identisch mit dem Wasser vor der Durchleitung durch die Kapsel (1).

Die erfindungsgemässe Kapsel (1) umfasst eine Kapselwand (2), einen Filter (3) und gegebenenfalls eine Abdeckung (4). Unter dem Begriff Kapsel wird eine Kapsel (1) verstanden, die auf allen Seiten durch die Kapselwand (2) und dem Filter (3) und/oder der Abdeckung (4) begrenzt ist, wobei die Kapselwand (2), der Filter (3) und/oder die Abdeckung (4) auch aus mehreren Teilstücken zusammengesetzt sein kann.

Das Volumen der Kapsel (1) beträgt bevorzugt 10 cm³ bis 200 cm³, insbesondere 20 cm³ bis 150 cm³, und ganz besonders bevorzugt 30 cm³ bis 100 cm³.

In einer bevorzugten Ausführungsform ist die Kapsel (1) eine Einwegkapsel. Unter Einwegkapsel wird verstanden, dass sie für den Einmalgebrauch bestimmt ist und in der Regel nicht auf einfache Art und Weise zerstörungsfrei geöffnet werden kann.

In einer Ausführungsform bildet die Kapselwand (2) einen einseitig offenen Hohlraum (6), wobei der Hohlraum (6) gegebenenfalls teilweise perforiert sein kann. Eine solche Perforation befindet sich bevorzugt gegenüber derjenigen Seite des Hohlraums (6), die durch die Kapselwand (2) nicht begrenzt ist.

In einer Ausführungsform wird die Kapsel (1) auf allen Seiten durch die Kapselwand (2) oder den Filter (3) begrenzt. Somit verschliesst der Filter (3) die offene Seite des durch die Kapselwand (2) gebildeten Hohlraums (6) der Kapsel (1) ganz.

Die Kapselwand (2) besteht vorteilhafterweise im Wesentlichen aus Metall, Kunststoff und/oder Filterstoff, d.h. zumindest der grösste Teil der Kapselwand (2) besteht aus Metall, Kunststoff und/oder Filterstoff (3a). Die Kapselwand (2) kann zudem noch mit anderen Materialien beschichtet sein.

In einer bevorzugten Ausführungsform besteht die Kapselwand (2) im Wesentlichen aus Metall und/oder Kunststoff. Bevorzugtes Metall ist Aluminium, Eisen, Stahl, Kupfer und/oder Messing, wobei Aluminium ganz besonders bevorzugt ist. Bevorzugter Kunststoff ist Polyethylentherephthalat, Polybutylentherephthalat, Polystyrol, Polypropylen, Polycarbonat, Polyamid, kompostierbarer Kunststoff, d.h. Kunststoff welcher leicht biologisch abbaubar ist, Poly(4-methyl penten-1), Polyethersulfon, PTFE, Polyurethan und/oder Polyester dar.

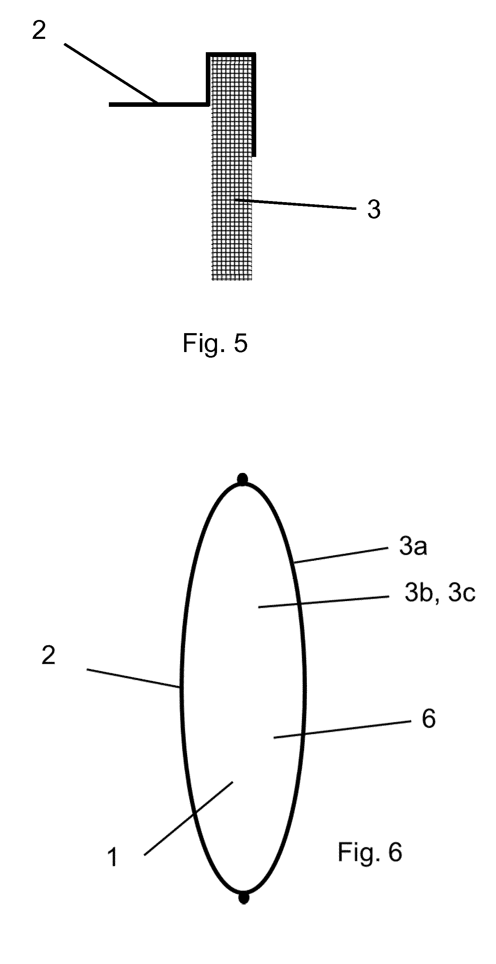

In einer anderen bevorzugten Ausführungsform besteht die Kapselwand (2) im Wesentlichen aus Filterstoff (3a). Unter Filterstoff (3a) wird Filtermaterial verstanden, welches typischerweise als Filter (3) dient und in Stoffform vorliegt und eine minimale Reisskraft aufweist. Dadurch kann der Filterstoff (3a) formgebend sein und im Wesentlichen die Form der Kapsel (1) bestimmen. Bevorzugter Filterstoff ist Gewebe, insbesondere Filtergewebe, Filze, Vliese, und/oder Papier. Diese Ausführungsform kann beispielsweise für Kaffeemaschinen Nespresso Professional vorteilhaft sein. Ein Querschnitt einer solchen Kapsel ist schematisch in Fig. 6 dargestellt.

Der Filter (3) kann als Filterstoff (3a), Fasern (3b) und/oder als Filterpartikel (3c) vorliegen. Liegt der Filter (3) als Filterstoff (3a) vor, kann er beispielsweise den Hohlraum (6) abdecken und dadurch die Kapsel (1) verschliessen. Liegt der Filter (3) als Fasern (3b) und/oder Filterpartikel (3c) vor, füllen diese vorteilhafterweise den Hohlraum (6) ganz oder teilweise aus. Der Filter (3) basiert vorteilhafterweise aus organischem und/oder anorganischem Material. Das organische Material stellt bevorzugt ein Gewebe, Filz, Vlies, faserorientiertes Vlies, Spinnvlies, Wirrfaservlies, Papier, Aktivkohle, Cellulose, modifizierte Cellulose, Cellulosefaser, Watte, Aerogel, insbesondere Aerogel auf Kohlenstoffbasis oder Kunststoffbasis, kompostierbarer Kunststoff, d.h. Kunststoff welcher leicht biologisch abbaubar ist, Kunstfaser, insbesondere Kunstfasern auf Basis von Polyethylentherephthalat, Polybutylentherephthalat, Polypropylen, Polycarbonat, Poly(4-methyl penten-1), Polyethersulfon, PTFE, Gore-Tex^{®}, Polyurethan, Polyester und/oder Polyamide, Filtermaterialien mit offener Zell Struktur, beispielsweise auf Basis von PTFE, PE, PA, PVC, PU und/oder PP, dar. Das anorganische Material stellt bevorzugt poröse Feststoffe, poröse Keramik, Glasfaser, Glasfaservliese, Zeolithe, Perlite, Kieselgur, Sintermetalle, Glashohlkugeln, Sande und/oder Aeorgele, insbesondere Aerogele auf Silikatbasis, dar.

In einer Ausführungsform der Kapsel (1) ist der Filter (3) an der Kapselwand (2) befestigt. Eine solche Befestigung erfolgt bevorzugt mechanisch und/oder mittels Kleben. Geeignete Kleber und mechanische Befestigungen sind dem Fachmann bekannt. Ein Ausschnitt einer nicht-limitierende Ausführungsform einer mechanischen Befestigung des Filters (3) mit der Kapselwand (2) ist in Fig. 5 dargestellt.

Die Abdeckung (4) ist erfindungsgemäss optional und daher nicht zwingend.

Die Abdeckung (4) kann - je nach Materialbeschaffenheit - bevorzugt vor dem Einlegen der Kapsel (1) in die Kapselmaschine entfernt werden, oder in der Kapselmaschine durch den ausgeübten Druck und die Funktionsweise der Kapselmaschine gezielt punktuell zerstört werden, sodass das durch den Filter gereinigte Wasser abfliessen kann.

Wenn der Filter (3) als Filterstoff (3a) vorliegt und den Hohlraum (6) abdeckt, schützt die Abdeckung (4) den Filter (3) beispielsweise vor Verschmutzung. Liegt der Filter (3) als lockere, d.h. nicht zu einem Gewebe oder Vliess verarbeitete Fasern (3b) und/oder als Filterpartikel (3c) vor, schliesst die Abdeckung (4) vorteilhafterweise die Fasern (3b) und/oder die Filterpartikel (3c) in dem Hohlraum (6) ein.

In einer Ausführungsform ist die Abdeckung (4) in Form einer Folie, wobei die Folie bevorzugt eine Aluminiumfolie und/oder eine Kunststofffolie, wie beispielsweise aus kompostierbarem Kunststoff, ist.

In einer anderen Ausführungsform ist die Abdeckung (4) mit dem Filter (3) identisch, wobei der Filter (3) bevorzugt im Wesentlichen aus Gewebe, Flies, kompostierbarem Kunststoff und/oder Papier besteht oder der Filter (3) mit Gewebe, Flies und/oder Papier umhüllt ist. In diesem Fall dient der Filter (3) als Abdeckung (4).

Die erfindungsgemässe Kapsel (1) enthält im Wesentlichen keinen Geschmackstoff (5). Gemäss dem erfindungsgemässen Verfahren wird Wasser in einer Kapselmaschine durch eine Kapsel (1) geleitet. Dieses Wasser wird dann im Gefäss (7) gesammelt. Der Geschmackstoff (5) wird in ein Gefäss (7) gegeben bevor, während und/oder nachdem das Wasser im Gefäss (7) gesammelt wird. Das Gefäss (7) ist typischerweise ein Trinkgefäss mit einem Fassungsvermögen von typischerweise bis zu ½ Liter wie beispielsweise eine Tasse, ein Trinkglas, ein Mug und/oder ein Becher, und/oder ein Krug oder eine Flasche mit einem Fassungsvermögen von etwa ½ Liter bis etwa 5 Liter.

In einer Ausführungsform wird das Wasser in der Kapselmaschine erhitzt bevor das Wasser im Gefäss (7) gesammelt wird. Unter erhitztem Wasser wird verstanden, dass die Wassertemperatur auf mindestens 60°C, insbesondere auf mindestens 70°C, und bevorzugt auf mindestens 80°C, erhitzt wird. Erhitztes Wasser kann auch Wasserdampf sein, welcher in der Regel die Temperatur von 120°C nicht übersteigt. Das Wasser kann vor, in und/oder nach der Kapsel (1) erhitzt werden, wobei die Erhitzung bevorzugt vor der Kapsel durchgeführt wird.

Der Geschmackstoff (5) ist in der Regel ein als Lebensmittel zugelassener Geschmackstoff. Vorteilhafterweise ist er im Wesentlichen wasserlöslich, in Wasser dispergierbar, insbesondere mit heissem Wasser. Dies ermöglicht auch, dass der Geschmackstoff (5) mittels Wasser einfach aus einer Matrix wie beispielsweise Kaffeepulver oder Teekraut heraus gelöst wird. Unter heissem Wasser wird verstanden, dass die Wassertemperatur mindestens 40°C, insbesondere mindestens 55°C, und bevorzugt mindestens 70°C, beträgt. Typischerweise beträgt die Wassertemperatur nicht mehr als 100°C.

Bevorzugt wird der Geschmackstoff (5) aus Teekräuter oder Kaffeepulver, insbesondere gemahlenes Kaffeepulver, herausgelöst und/oder liegt als wässriges Konzentrat und/oder in Trockenform als Bouillon, Suppe, Milchpulver, Sirup, Punch, Fruchtsaftgranulat, Teegranulat, wie beispielsweise gefriergetrocknetes Teegranulat, welches auch als "Eistee" verkauft wird, und/oder Kaffeegranulat wie gefriergetrockneter Kaffee vor.

Die Kapsel (1) wird bevorzugt zum Filtern von Wasser in einer Kapselmaschine verwendet, wobei das Wasser anschliessend in einem Gefäss (7) gesammelt wird. Das Wasser kann gekühlt, erwärmt und/oder erhitzt sein, kann aber auch Raumtemperatur besitzen.

In einer bevorzugten Ausführungsform wird heisses oder erhitztes Wasser verwendet.

Gemäss der erfindungsgemässen Verwendung wird dem Gefäss (7) bevorzugt mindestens ein Geschmackstoff (5) zugegeben bevor, während und/oder nachdem das gefilterte Wasser im Gefäss (7) gesammelt wird.

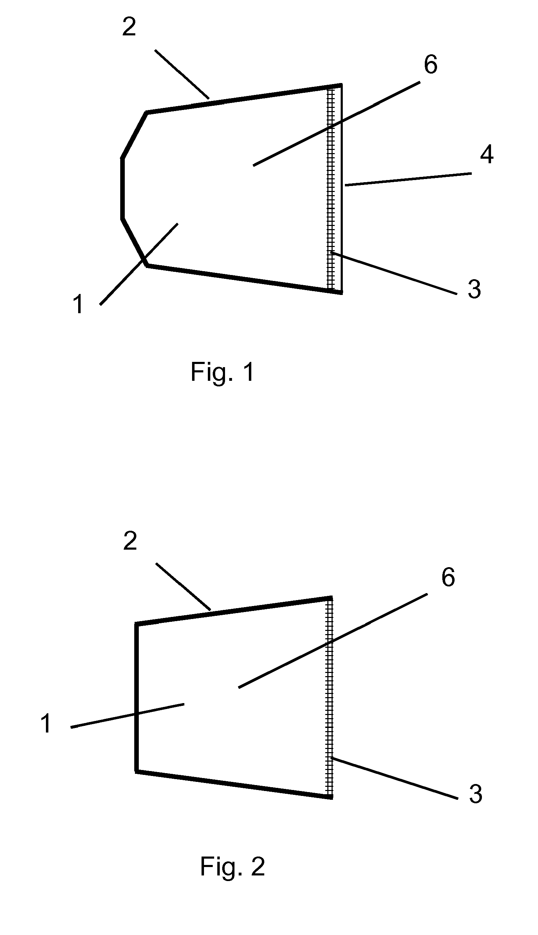

Im Folgenden werden nicht-limitierende, bevorzugte Ausführungsformen anhand von Zeichnungen (Fig. 1 bis Fig. 6) beschrieben, die nicht einschränkend auszulegen sind. Diese Erläuterungen sind Teil der vorgehenden Beschreibung. Es zeigen:
- Fig. 1:: Einen schematischen seitlichen Querschnitt der Kapsel (1) mit der Kapselwand (2), dem Filter (3) und der Abdeckung (4). Die Kapselwand (2) und der Filter (3) bilden den Hohlraum (6), welcher leer sein kann, d.h. beispielsweise lediglich mit Luft und/oder einem Inertgas gefüllt. Der Filter (3) ist in Fig. 1 so angeordnet, dass er an der Kapselwand (2) befestigt ist und das Filtermaterial ist bevorzugt aus Filterstoff (3a), aus Fasern (3b) und/oder aus Filterpartikeln (3c), wobei bei dieser Ausführungsform die Fasern (3b) und/oder die Filterpartikel (3c) bevorzugt in einem Filterstoff (3a) eingeschlossen sind. Führt nun die Kapselmaschine Wasser durch die Kapselwand (2), beispielsweise auf der Seite in die Kapsel (1) ein, die dem Filter (3) und der Abdeckung (4) gegenüber liegt, muss das Wasser aufgrund der Funktionsweise von Kapselmaschinen zwingend durch den Filter (3) aus der Kapsel (1) fliessen. Somit bleiben unerwünschte partikuläre Verunreinigungen im Filter (3) zurück und das austretende Wasser ist gefiltert und somit gereinigt. Fig. 1 zeigt zudem die optionale Abdeckung (4), welche den Filter (3) beispielsweise vor Verschmutzung schützen kann, bevor die Kapsel (1) verwendet wird.
- Fig. 2:: Einen schematischen seitlichen Querschnitt der Kapsel (1) mit der Kapselwand (2), dem Filter (3) und dem Hohlraum (6). Bei dieser Ausführungsform ist der Filter (3) bevorzugt aus Filterstoff (3a), aus Fasern (3b) und/oder Filterpartikel (3c), wobei bei dieser Ausführungsform Fasern (3b) und/oder Filterpartikel (3c) bevorzugt in einem Filterstoff (3a) eingeschlossen sind. Zudem ist der Filter (3) bevorzugt so stabil, dass er vor der Verwendung der Kapsel (1) bei normaler Handhabung nicht beschädigt wird. Die Form der Kapselwand (2) - und dadurch auch die Form der Kapsel (1) - ist in Fig. 2 anders dargestellt als in Fig. 1. Dadurch soll gezeigt werden, dass der Form der Kapsel (1) resp. der Kapselwand (2) keine wesentlichen Grenzen gesetzt sind, sofern sich die Kapsel (1) in eine Kapselmaschine einführen lässt und die Funktion des Filterns von Wasser erfüllt.

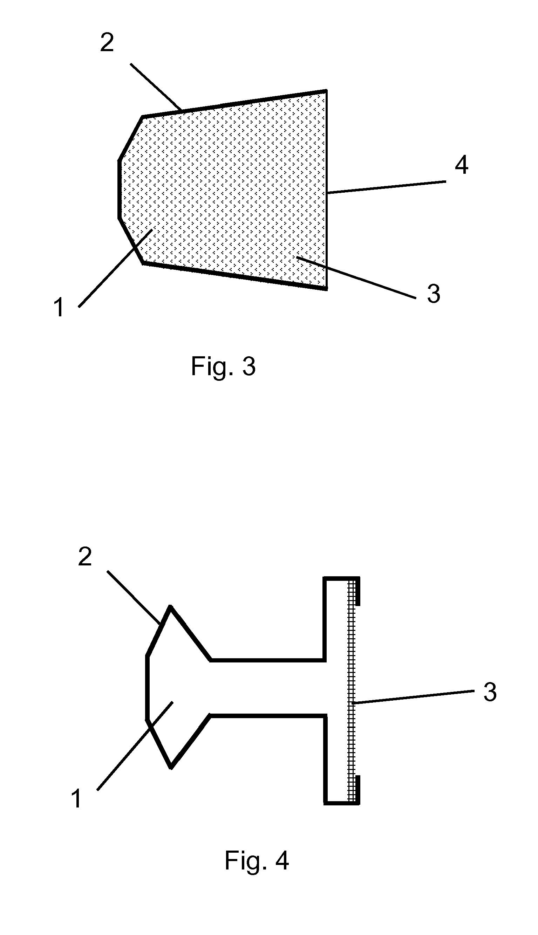

- Fig. 3:: Einen schematischen seitlichen Querschnitt der Kapsel (1) mit der Kapselwand (2), dem Filter (3) und der Abdeckung (4). Bei dieser Ausführungsform ist der Filter (3) im ganzen Hohlraum (6) verteilt. Das Filtermaterial liegt in dieser Ausführungsform bevorzugt als Fasern (3b) und/oder als Filterpartikel (3c) vor.
- Fig. 4:: Einen weiteren schematischen seitlichen Querschnitt der Kapsel (1) mit der Kapselwand (2) und dem Filter (3). Die Kapsel (1) in dieser Darstellung besitzt einen anderen Querschnitt. Da das Volumen des durch die Kapselwand (2) und den Filter (3) begrenzten Hohlraums (6) eine untergeordnete Rolle spielt, sollte bei der Kapselform lediglich darauf geachtet werden, dass das Einführen von Wasser in die Kapsel (1) und der Auslass von Wasser aus der Kapsel (1) wie für die jeweilige Kapselmaschine vorgesehen verläuft, wobei das Wasser zwischen Einlass und Auslass durch den Filter (3) fliesst.
- Fig. 5:: Einen Ausschnitt aus dem seitlichen Querschnitt der Kapsel (1) mit der Kapselwand (2) und dem Filter (3). Fig. 5 deutet schematisch die Art und Weise an, wie der Filter (3) und/oder die Abdeckung (4) (nicht dargestellt) mechanisch an der Kapselwand (2) befestigt werden kann. Der Filter (3) kann zusätzlich auch noch mittels Kleben an der Kapselwand (2) befestigt werden. Alternativ kann der Filter (3) nur durch Kleben an der Kapselwand (2) befestigt werden.
- Fig. 6:: Einen weiteren schematischen seitlichen Querschnitt der Kapsel (1) mit der Kapselwand (2) und dem Filter (3). Kapseln (1) mit einem solchen seitlichen Querschnitt sind beispielsweise geeignet für Kapselkaffeemaschinen der Marken Nespresso Professional, Zenius und/oder Gemini CS, die im Handel angeboten werden. Der Filter (3) kann innerhalb Kapselwand (2) angeordnet sein und den Hohlraum (6) ausfüllen und/oder selber die Kapselwand (2) bilden. Bildet der Filter (3) selber die Kapselwand (2), ist der Filter (3) bevorzugt aus Filterstoff (3a), wobei der Filterstoff (3a) bevorzugt eine für die Funktionsweise der Kapsel genügend hohe Stabilität aufweist. Filter (3), welcher den Hohlraum (6) ausfüllt, ist bevorzugt aus Fasern (3b) und/oder Filterpartikel (3c).

## Patentansprüche

1. Kapsel (1) geeignet für Kapselmaschinen umfassend Kapselwand (2), Filter (3) und gegebenenfalls Abdeckung (4), **dadurch gekennzeichnet, dass** die Kapsel (1) im Wesentlichen keinen Geschmackstoff (5) enthält.

2. Kapsel (1) nach Anspruch 1, **dadurch gekennzeichnet, dass** das Volumen der Kapsel (1) 10 cm³ bis 200 cm³, bevorzugt 20 cm³ bis 150 cm³, insbesondere 30 cm³ bis 100 cm³, beträgt.

3. Kapsel (1) nach Anspruch 1 oder 2, **dadurch gekennzeichnet, dass** die Kapsel (1) eine Einwegkapsel ist.

4. Kapsel (1) nach mindestens einem der Ansprüche 1 bis 3, **dadurch gekennzeichnet, dass** die Kapselwand (2) ein einseitig offener Hohlraum (6) bildet, wobei die Kapselwand (2) gegebenenfalls teilweise perforiert sein kann, wobei sich die Perforation bevorzugt gegenüber derjenigen Seite des Hohlraums (6) befindet, die durch die Kapselwand (2) nicht begrenzt ist.

5. Kapsel (1) nach mindestens einem der Ansprüche 1 bis 4, **dadurch gekennzeichnet, dass** der Filter (3) die offene Seite des Hohlraums (6) ganz verschliesst.

6. Kapsel (1) nach mindestens einem der Ansprüche 1 bis 5, **dadurch gekennzeichnet, dass** der Filter (3) an der Kapselwand (2) befestigt ist, wobei die Befestigung bevorzugt mittels Kleben erfolgt und/oder eine mechanische Befestigung ist.

7. Kapsel (1) nach mindestens einem der Ansprüche 1 bis 6, **dadurch gekennzeichnet, dass** der Filter (3) auf organischem und/oder anorganischem Material basiert, wobei das organische Material bevorzugt ein Gewebe, Filze, Vliese, faserorientierte Vliese, Spinnvliese, Wirrfaservliese, Papier, Aktivkohle, Kunstfaser, Cellulose, kompostierbarer Kunststoff und/oder Watte darstellt und das anorganische Material bevorzugt poröse Feststoffe, poröse Keramik, Glasfaser, Glasfaservliese, Zeolithe, Perlite, Kieselgur, Sintermetalle, Glashohlkugeln, Sande und/oder Aerogele darstellt.

8. Kapsel (1) nach mindestens einem der Ansprüche 1 bis 7, **dadurch gekennzeichnet, dass** die Kapselwand (2) im Wesentlichen aus Metall, insbesondere aus Aluminium, Eisen, Stahl, Kupfer und/oder Messing, aus Kunststoff, insbesondere basierend auf Polyethylentherephthalat, Polybutylentherephthalat, Polystyrol, Polypropylen, Polycarbonat, kompostierbarem Kunststoff und/oder Polyamid, und/oder aus Filterstoff, insbesondere Gewebe, Filze, Vliese und/oder Papier besteht.

9. Kapsel (1) nach mindestens einem der Ansprüche 1 bis 8, **dadurch gekennzeichnet, dass** die Abdeckung (4) in Form einer Folie ist, wobei die Folie bevorzugt eine Aluminiumfolie oder eine Kunststofffolie ist, oder dass die Abdeckung (4) mit dem Filter (3) identisch ist, wobei der Filter (3) bevorzugt im Wesentlichen aus Gewebe, Flies und/oder Papier besteht oder der Filter (3) mit Gewebe, Flies und/oder Papier umhüllt ist.

10. Verfahren zum Herstellen von Getränken umfassend
- das Einlegen der Kapsel (1) nach mindestens einem der Ansprüche 1 bis 9 in Kapselmaschine,
- das Hindurchleiten von Wasser durch die Kapsel (1) und Sammeln des Wassers in einem Gefäss (7),
**dadurch gekennzeichnet, dass** dem Gefäss (7) mindestens ein Geschmackstoff (5) zugegeben wird bevor, während und/oder nachdem das Wasser im Gefäss (7) gesammelt wird.

11. Verfahren nach Anspruch 10, **dadurch gekennzeichnet, dass** das Wasser in der Kapselmaschine erhitzt wird bevor das Wasser im Gefäss (7) gesammelt wird.

12. Verfahren nach Anspruch 10 oder 11, **dadurch gekennzeichnet, dass** der Geschmackstoff (5) im Wesentlichen wasserlöslich und/oder in Wasser dispergierbar ist.

13. Verfahren nach Anspruch 10 bis 12, **dadurch gekennzeichnet, dass** der Geschmackstoff (5) aus Teekräuter oder Kaffeepulver herausgelöst werden kann und/oder als Konzentrat und/oder in Trockenform als Bouillon, Suppe, Milchpulver, Sirup, Punch, Fruchtsaftgranulat, Teegranulat und/oder Kaffeegranulat vorliegt.

14. Verwendung der Kapsel (1) nach mindestens einem der Ansprüche 1 bis 9, zum Filtern von Wasser in einer Kapselmaschine, wobei das Wasser anschliessend in einem Gefäss (7) gesammelt wird.

15. Verwendung nach Anspruch 14 **dadurch gekennzeichnet, dass** dem Gefäss (7) mindestens ein Geschmackstoff (5) zugegeben wird bevor, während und/oder nachdem das Wasser im Gefäss (7) gesammelt wird.
